Europäisches Patentamt

European Patent Office

Office européen des brevets

(11) Veröffentlichungsnummer: **0 271 654 B1**

(12) **EUROPÄISCHE PATENTSCHRIFT**

(45) Veröffentlichungstag der Patentschrift: **08.01.92**

(51) Int. Cl.⁵: **C01B 17/04**

(21) Anmeldenummer: **87114317.8**

(22) Anmeldetag: **01.10.87**

(54) **Verfahren zur simultanen Erzeugung von elementarem Schwefel aus H2S-haltigen Gasen und SO2-haltigen Gasen.**

(30) Priorität: **16.12.86 DE 3642858**

(43) Veröffentlichungstag der Anmeldung:
**22.06.88 Patentblatt 88/25**

(45) Bekanntmachung des Hinweises auf die
Patenterteilung:
**08.01.92 Patentblatt 92/02**

(84) Benannte Vertragsstaaten:
**AT DE GB**

(56) Entgegenhaltungen:
**DE-A- 2 346 247**
**DE-A- 2 917 245**
**DE-A- 2 933 713**
**DE-A- 3 335 931**
**US-A- 4 038 036**

(73) Patentinhaber: **Zimmer Aktiengesellschaft**
**Borsigallee 1**
**W-6000 Frankfurt am Main 60(DE)**

(72) Erfinder: **Lell, Rainer**
**Marköbeler Strasse 16**
**W-6369 Nidderau 5(DE)**
Erfinder: **Sud, Kuldip**
**Göttinger Strasse 13**
**W-5000 Köln 40(DE)**

**Beschreibung**

Die Erfindung betrifft ein kontinuierliches Verfahren zur simultanen Erzeugung von elementarem Schwefel aus $H_2S$-haltigen Gasen und $SO_2$-haltigen Gasen, insbesondere aus Sauergas und aus, bei der Rauchgasentschwefelung erhaltenem, $SO_2$-Reichgas.

Die Gewinnung von elementarem Schwefel durch katalytische Claus-Reaktion ist großtechnischer Standard, erfordert aber ein stöchiometrisches $H_2S : SO_2$-Verhältnis und stark verdünnte Einsatzgase mit limitiertem Feuchtigkeitsgehalt.

In Raffinerien mit angeschlossenem Kraftwerk stehen im allgemeinen sowohl $H_2S$-haltige Gase als auch $SO_2$-haltige Gase zur Verfügung. Die Menge der Schwefelverbindungen hängt dabei sowohl von der Kapazität der Anlagen als auch von den verarbeiteten Rohstoffen ab und schwankt entsprechend in weiten Proportionen, ohne jemals über einen längeren Zeitraum das stöchiometrische $H_2S : SO_2$-Verhältnis zu erreichen. Auch liegen die Konzentrationen mit über 50 Mol-% $H_2S$ im Sauergas bzw. über 90 Mol-% $SO_2$ im Reichgas um ein Vielfaches zu hoch.

Es wurde daher vorgeschlagen, die Konzentration der Schwefelverbindungen zuvor durch direkte thermische Oxidation des $H_2S$ gemäß

$$2 H_2S + O_2 \rightarrow 2 S + 2 H_2O$$

bzw. durch thermische oder katalytische Reduktion des $SO_2$ gemäß

$$SO_2 + 2 H_2 \rightarrow S + 2 H_2O$$

zu senken.

Diese Gleichungen entsprechen aber nicht dem tatsächlichen Verlauf. In beiden Fällen liegt das Gleichgewicht in Abhängigkeit der Temperatur bei etwa 60 - 70 %, wobei stets auch die höher oxidierte bzw. reduzierte Verbindung entsteht. Doch selbst wenn es möglich wäre, die Reaktionen soweit fortzuführen, daß die für die katalytische Claus-Reaktion nötige, geringe Konzentration an Schwefel-Verbindungen erreicht würde, könnten diese Gase wegen der gleichzeitig gebildeten erheblichen Wassermengen nur bedingt in der Claus-Anlage eingesetzt werden, da der erhöhte Wasserdampfgehalt zu erheblichen Aktivitätsverlusten des Katalysators führt. So wurde festgestellt, daß der Aktivitätsverlust in einem Zeitraum von 3 Monaten zu einem Umsatzrückgang von etwa 20 % bei Verwendung von handelsüblichen Claus-Katalysatoren führt. Da sich eine Wasserabscheidung durch Kondensation auch aus Gründen der Wärme-Ökonomie verbietet, bleibt lediglich das Verdünnen mit schwefelfreien, inerten Gasen, was z. B. durch Verbrennung des $H_2S$ mit Luft anstelle von Sauerstoff erreicht wird, aber dann zu einer unerwünschten Erhöhung der Apparate-Kapazität und des Wärmebedarfs führt. Ein weiteres sehr gravierendes Problem liegt in der Verfärbung des gebildeten Schwefels, wenn das Sauergas, wie allgemein vorhanden, Kohlenwasserstoffe enthält. Auch sind die Investitionskosten und, insbesondere bei der Reduktion, die Betriebskosten sehr hoch.

Die DE-OS 2346247 versucht daher, Schwefel durch direkte, nichtkatalytische Umsetzung von $H_2S$ mit $SO_2$ zu gewinnen, wobei das $SO_2$ teils durch $H_2S$-Oxidation, teils durch Fremdeinspeisung bereitgestellt wird. Obgleich andeutungsweise auch die Anwendung bei Gasen mit überstöchiometrischem $SO_2$-Gehalt möglich sein soll, läßt sich dieser Schrift lediglich eine Verfahrensweise für Gase mit $H_2S$-Überschuß entnehmen.

Auch wird die Verweilzeit durch die Dimensionen der $H_2S$-Brennkammer bestimmt, ohne daß ersichtlich wäre, wie die, im Vergleich zur Oxidation, geringere Reaktionsgeschwindigkeit der direkten Schwefelbildung berücksichtigt werden könnte.

Aufgabe der vorliegenden Erfindung war daher das Auffinden eines möglichst wirtschaftlichen Verfahrens zur simultanen Erzeugung von qualitativ einwandfreiem, elementarem Schwefel aus $H_2S$-haltigen Gasen und $SO_2$-haltigen Gasen, deren Verhältnis zueinander und deren Menge hohen Schwankungen unterworfen sind, wobei das Abgas direkt als Einsatzgas einer katalytischen Claus-Anlage verwendbar sein sollte.

Diese Aufgabe wird bei dem eingangs genannten Verfahren erfindungsgemäß dadurch gelöst, daß

a) das gesamte $H_2S$-haltige Gas in Gegenwart eines $O_2$-haltigen Gases, bevorzugt von Luft, im Mol-Verhältnis $H_2S : O_2$ von weniger als 2 : 1 und eines Teiles des $SO_2$-haltigen Gases im Mol-Verhältnis $H_2S : SO_2$ von mehr als 4 : 1 im vorderen Bereich einer 1. Reaktionszone bei Temperaturen im Bereich von 800 - 1400 °C einer partiellen Verbrennung unterworfen wird, wobei ein Reaktionsgemisch aus elementarem Schwefel mit einer $H_2S$- und $SO_2$-Menge im Mol-Verhältnis von 2 : 1 bis 1 : 10 erzeugt

2

wird;

b) das restliche $SO_2$-haltige Gas in einer 2. Reaktionszone durch Umsetzung mit einem Reduktionsgas bei Temperaturen im Bereich von 1000 - 1500 °C in ein elementaren Schwefel sowie $H_2S$ und $SO_2$ im Mol-Verhältnis von 2 : 1 bis 10 : 1 enthaltendes Reaktionsgemisch überführt wird;

c) das im hinteren Bereich der 1. Reaktionszone gebildete Gemisch der Reaktionsströme aus den Stufen a) und b) in einer anschließenden 3. Reaktionszone ohne weitere direkte Wärmezufuhr bei einer Temperatur im Bereich von 800 - 1300 °C umgesetzt wird, unter Erzeugung von elementarem Schwefel und Abgas mit einem Mol-Verhältnis von $H_2S$ $SO_2$ von etwa 2 : 1, maximal etwa 20 Mol-% $H_2S$ und weniger als etwa 65 Mol-% $H_2O$;

d) das Abgas aus Stufe c) nach partieller Abkühlung unter Wärmerückgewinnung und Schwefel-Kondensation in einer mehrstufigen Claus-Anlage zu weiterem elementarem Schwefel umgesetzt wird.

Das erfindungsgemäße Verfahren findet vorzugsweise Anwendung in Raffinerien mit angeschlossenem Kraftwerk zur gleichzeitigen Aufarbeitung des Sauergases aus der Raffinerie und des $SO_2$-Reichgases aus der Rauchgas-Entschwefelung, eignet sich aber ebenso für Gasströme anderer Provenienz.

Das gesamte $H_2S$-haltige Gas wird der Oxidationszone zugeführt, während das $SO_2$-haltige Gas, bevorzugt mengengeregelt zwischen Oxidations- und Reduktionszone, aufgeteilt wird. Vom $H_2S$ wird jedoch nur soviel zu $SO_2$ oxidiert, wie für die Flammenstabilität erforderlich ist. Diese Menge erhöht sich lediglich bei der Verarbeitung von Gasen mit starkem $H_2S$-Überschuß. Je nach zu verarbeitender $SO_2$-Menge wird ein mehr oder weniger großer Anteil zu Schwefel und $H_2S$ reduziert, wobei die einzige Begrenzung durch die von der nachfolgenden katalytischen Claus-Anlage tolerierten Wassermenge (im allgemeinen weniger als etwa 65 Mol-%) gegeben ist. Bei Verwendung von $H_2$ als Reduktionsgas könnte dieser Wassergehalt überschritten werden. Dem kann durch Einsatz eines Methan- und/oder CO-haltigen Reduktionsgases entgegengewirkt werden.

In die Oxidationszone wird außerdem ein $O_2$-haltiges Gas, insbesondere Luft, eingeleitet, wobei die $O_2$-Menge der zu $SO_2$ zu oxidierenden $H_2S$-Menge entspricht. Als Reduktionsgas finden $H_2$, CO und/oder niedere Kohlenwasserstoffe wie Methan, Äthan usw. Verwendung. Ohne Nachteil können Gasgemische, welche Methan, $H_2$ und CO enthalten und in Raffinerien häufig kostengünstig verfügbar sind, eingesetzt werden.

In Hinsicht auf den Wärmehaushalt hat es sich als besonders günstig erwiesen, die Erzeugung des Reduktionsgases und der für die $SO_2$-Reduktion erforderlichen Wärme bis zu einem gewissen Grad zu kombinieren. In diesem Fall wird das im wesentlichen aus Methan bestehende Heizgas in 3 Teilströme im Verhältnis von etwa (20 bis 50) : (79 bis 30) : (1 bis 20), wobei die Summe gleich 100 ist, vorzugsweise etwa 35 : 50 : 15, aufgeteilt. Der 1. Teilstrom wird mit Luft unterstöchiometrisch, bevorzugt mit Lambda etwa gleich 0,6 - 0,95, besonders bevorzugt Lambda etwa gleich 0,7, verbrannt und die je nach Wärmeverlust ca. 1700 - 1900 °C heißen Verbrennungsgase mit dem 2. Teilstrom vermischt und in die eigentliche Reduktionszone eingeleitet. Der 3. Teilstrom wird, gegebenenfalls nach indirekter Vorwärmung auf zum Beispiel etwa 150 °C, zusammen mit $SO_2$-Reichgas in die Reduktionszone eingeführt. Das in dieser Weise zur Verfügung gestellte Reduktionsgas enthält als reduzierende Komponenten Methan, Wasserstoff und Kohlenmonoxid und weist in Abhängigkeit der Wärmeverluste eine Temperatur von 1350 - 1550 °C auf. Beispielsweise kann es wie folgt zusammengesetzt sein:

| | |
|---|---|
| $CH_4$ | 20,0 Mol-% |
| $N_2$ | 50,9 Mol-% |
| $CO_2$ | 6,8 Mol-% |
| $H_2$ | 8,7 Mol-% |
| CO | 2,9 Mol-% |
| $H_2O$ | 10,7 Mol-% |

Zwecks weiterer Energieeinsparung kann das in die 2. Zone einzuleitende $SO_2$-haltige Gas, bevorzugt nach Vorwärmung durch indirekten Wärmetausch auf beispielsweise 450 °C, in zwei Teilströme im Verhältnis von etwas über 2 : 1 aufgeteilt werden. Der größere Teilstrom wird in der eigentlichen Reduktionszone mit dem wie vorstehend beschrieben erhaltenen Reduktionsgas bei einer sich ergebenden Mischtemperatur von etwa 1200 °C reduziert. Dem Reaktionsgemisch aus der Reduktionszone wird dann vor der Vereinigung mit dem Gemisch aus der Oxidationszone der restliche $SO_2$-Teilstrom zugeführt, was anbetracht einer Mischtemperatur von über 900 °C bereits bei ausreichender Verweilzeit zur Bildung von elementarem Schwefel führt. Vorteilhafterweise trennen Mischwände die eigentliche Reduktionszone von der vorangehenden Verbrennungszone und, sofern vorhanden, von der anschließenden Schwefelbildungszone.

Das in der Reduktionszone mit oder ohne anschließende Schwefelbildungszone gebildete Gasgemisch wird mit dem der Oxidationszone im hinteren Bereich dieser Zone vermischt und gelangt anschließend in eine 3. Reaktionszone, die eigentliche Schwefelbildungszone. Um eine gute Durchmischung der Gase zu gewährleisten, ist diese 3. Zone von den vorangehenden vorzugsweise durch eine senkrecht stehende, gitter- oder wabenförmige Mischwand mit einem Differenzdruck von etwa 3 - 10 mbar getrennt.

Während in der Oxidationszone bei von stöchiometrischen Verhältnissen abweichenden Bedingungen eine nennenswerte Umsetzung von $H_2S$ mit $SO_2$ zu Schwefel nicht erreicht wird, und auch in der Reduktionszone nur geringe Mengen Schwefel entstehen, konzentriert sich die Schwefelerzeugung auf diese 3. Zone. Durch die räumliche Trennung der Schwefelbildung werden in diesem Fall folgende Vorteile erzielt:

1. individuelle Verweilzeit, und dadurch optimale Annäherung an das thermodynamische Gleichgewicht

2. Erzeugung eines Schwefels mit hoher Reinheit, da die Kohlenwasserstoffe, die sowohl im Heizgas als auch im Sauergas enthalten sind, fast vollständig verbrannt werden bzw. entstehender Kohlenstoff mit den Reaktionskomponenten zu COS und $CS_2$ bedingt durch die individuelle Verweilzeit reagiert, so daß kein Ruß gebildet werden kann.

Die Temperatur beträgt vorzugsweise in der 1. Zone 900 - 1250 °C, in der 2. Zone 1150 bis 1300 °C und in der 3. Zone 900 - 1200 °C. Um diese Temperaturen zu erzielen, kann es erforderlich sein, ein kohlenwasserstoffhaltiges Heizgas in Zone 2 separat zu verbrennen und/oder in der Zone 1 dem Sauergas zuzumischen. Zusätzlich können das $SO_2$-haltige Gas, das Reduktionsgas, das Sauergas und/oder die Verbrennungsluft durch indirekten Wärmetausch vor Einführung in die jeweilige Zone erhitzt werden. In Hinsicht auf die Reinheit des in der Zone 2 bereits entstehenden Schwefels wird dieser Zone vorzugsweise zumindest ein Teil der Wärme indirekt zugeführt. Diese Maßnahme kommt besonders dann in Betracht, wenn als Reduktionsgas Methan zur Verfügung steht. Als Heizgas kann irgendein kostengünstiges, niederes Kohlenwasserstoff-Gemisch eingesetzt werden. Bei entsprechender Gestaltung der Brenner besteht prinzipiell auch die Möglichkeit, einen flüssigen Brennstoff einzusetzen. Da keine der 3 Reaktionszonen einen Katalysator enthält, sind in Hinsicht auf eventuelle Katalysatorgifte keine besonderen Anforderungen an das Heizgas zu stellen. Grundsätzlich wäre eine katalytische Reduktion zwar denkbar, zweckmäßig jedoch nur, wenn diese Katalysatoren Temperaturen von 800 - 1500 °C erlauben.

Zweckmäßigerweise liegt die Temperatur der 1. und 2. Zone im oberen Bereich des angegebenen Temperaturintervalls. Zum einen wird dadurch die Bildung von COS und $CS_2$ in günstiger Weise reduziert, zum anderen kann die Temperatur der 3. Zone ohne Verbrennung von weiterem Heizgas innerhalb des Intervalls gehalten werden. Da die Schwefel-Bildungsreaktion leicht endotherm ist, liegt die Temperatur der 3. Zone entsprechend etwas niedriger als die der vorangehenden Zonen.

Die vorangehend geschilderte Aufteilung des $SO_2$-haltigen Gasstromes und der Umfang der Oxidations- und Reduktions-Reaktionen sind bestimmend für die Zusammensetzung des Abgases der 3. Zone. Um ohne Rückführung einer eventuell überschüssigen Komponente in einer katalytischen Claus-Anlage weiterbehandelt werden zu können, sollte das Molverhältnis $H_2S : SO_2$ etwa 2, genauer

$$\frac{H_2S + (COS \cdot a) + (2\ CS_2 \cdot b)}{SO_2} = 2$$

betragen, wobei a und b gleich oder verschieden sein können und den Umsetzungsgrad von COS bzw. $CS_2$ in der nachfolgenden Claus-Anlage repräsentieren. Außerdem ist die $H_2S$-Konzentration auf maximal etwa 20 Mol-% zu begrenzen. Da das Gleichgewicht der Schwefelbildungsreaktion je nach Temperatur bei ca. 60 - 70 % liegt, käme auch eine ständige, partielle, vorzeitige Entfernung des Schwefels in Betracht, die aber aus Gründen des Wärmehaushaltes auf besonders gelagerte Einzelfälle beschränkt ist.

Im Normalfall wird der gesamte in den Zonen 1 bis 3 gebildete Schwefel nach der 3. Reaktionszone durch Abkühlung des Gasgemisches unter die Kondensationstemperatur des Schwefels bei gleichzeitiger Wärmerückgewinnung, z. B. in Form von Wasserdampf, abgeschieden. Aus dem so von Schwefel befreiten Gas wird dann, gegebenenfalls nach geringfügiger Wiedererwärmung, in einer herkömmlichen katalytischen Claus-Anlage weiterer Schwefel gewonnen.

Überraschenderweise wurde festgestellt, daß entgegen bisheriger Erkenntnisse die partielle Oxidation des $H_2S$ bei räumlicher Trennung von der Schwefelbildungszone auch in Gegenwart großer Mengen $SO_2$, die ein Mehrfaches des $H_2S$ betragen können, völlig problemlos durchführbar ist. Das erfindungsgemäße Verfahren ist an kein Mindestverhältnis von $H_2S$ zu $SO_2$ gebunden, eignet sich sogar ganz besonders für die Aufarbeitung von Gasen mit $SO_2$-Überschuß. Der erzeugte Schwefel ist von hoher Reinheit, da erfindungsgemäß eine Verunreinigung durch unvollständig verbrannte Kohlenwasserstoffe weitgehend unterbunden wird.

Die Erfindung wird nachfolgend anhand von Beispielen unter Bezug auf die beigefügte schematische Zeichnung erörtert, jedoch ohne Beschränkung auf die beispielhaft gegebenen Bedingungen.

Beispiel 1: (Einsatz von Erdgas als Reduktionsgas)

In die Oxidationszone (1) werden 23,9 kmol/h auf 450 °C vorerhitztes $SO_2$-Reichgas (8) mit einem $SO_2$-Gehalt von 95,27 Mol-%, sowie über den $H_2S$-Brenner, welcher auch aus einem System mehrerer Einzelbrenner bestehen kann, 137,9 kmol/h Sauergas (7) mit einem $H_2S$-Gehalt von 89,20 Mol-% und 233,2 kmol/h Luft eingeführt. Gleichzeitig wird die Reduktionszone (2) mit den restlichen 21,4 kmol/h des vorerhitzten $SO_2$-Reichgases (9) und 10,79 kmol/h eines Reduktionsgases (10) mit 97,5 Mol-% $CH_4$, 0,9 % $C_2H_6$, 0,3 % $C_3H_8$, 0,9 % $N_2$ und 0,4 % $CO_2$ sowie über den Heizgasbrenner mit 4,38 kmol/h Heizgas (12) und 29,64 kmol/h Verbrennungsluft (11) beschickt, wobei das Heizgas unterstöchiometrisch verbrannt wird und die gleiche Zusammensetzung wie das Reduktiongas hat.

Bei einer Temperatur von etwa 1250 °C erfolgt in Zone 2 eine partielle Reduktion des $SO_2$, so daß ein Gemisch mit einem $H_2S$ zu $SO_2$-Verhältnis von 1,9 : 1 und einem Gehalt an dampfförmigem Schwefel ($S_2$) von 9,1 % entsteht. Gleichzeitig wird im Brennernahen Bereich der Zone 1 durch partielle $H_2S$-Oxidation ein etwa 1000 °C heißes, schwefelhaltiges Gemisch mit einem $H_2S$ zu $SO_2$-Verhältnis von 1,96 : 1 gebildet. Beide Gemische werden im hinteren Bereich der Zone 1 vermischt und über die Mischwand (5) in die Zone (3) eingeführt, in der bei einer Verweilzeit von etwa 1 sec eine weitere Umsetzung zu Schwefel erfolgt. Die Temperatur stellt sich auf etwa 1040 °C ein. Das die Reaktionszone (3) verlassende Gemisch (4) wird unter Erzeugung von 5 bar-Dampf auf 240 °C abgekühlt und der auskondensierende Schwefel in üblicherweise abgeschieden. Erhalten werden 2800 kg/h Schwefel mit einer Reinheit von 99,9 %. Das verbleibende Gasgemisch enthält 7,4 % $H_2S$, 3,8 % $SO_2$, 0,2 % COS + $CS_2$ sowie 31 % $H_2O$ und wird nach indirekter Erwärmung auf 260 °C in bekannter Weise in einer katalytischen Claus-Anlage zu weiterem elementaren Schwefel umgesetzt.

Beispiel 2: (Einsatz von Wasserstoff als Reduktionsgas)

Es wird analog zu Beispiel 1 verfahren, jedoch ohne Vorerhitzung des $SO_2$-Reichgases. Zone (1) wird mit 137,9 kmol/h Sauergas (89,2% $H_2S$), 233,2 kmol/h Oxidationsluft sowie 23,9 kmol/h $SO_2$-Reichgas beschickt und bei einer Temperatur von 1000 °C ein Gemisch mit einem $H_2S$ : $SO_2$-Verhältnis von 1,9 : 1 erzeugt. Gleichzeitig wird Zone (2) mit 21,4 kmol/h $SO_2$-Reichgas und 42,1 kmol/h Wasserstoff beschickt und durch partielle Reduktion bei 1320 °C in ein Gemisch mit einem $H_2S$ : $SO_2$-Verhältnis von 2 : 1 und einem Schwefelgehalt ($S_2$) von 11,6 % überführt.

Nach der Vermischung erfolgt die weitere Umsetzung zu Schwefel in Zone 3 bei 1150 °C und einer Verweilzeit von 1 sec. Durch Abkühlung auf 240 °C werden 2800 kg/h Schwefel mit einer Reinheit von 99,9 % abgeschieden. Das verbleibende Gasgemisch mit 7,6 % $H_2S$, 3,85 % $SO_2$, 0,1 % COS + $CS_2$ und 32,7 % $H_2O$ wird wie in Beispiel 1 weiteraufgearbeitet.

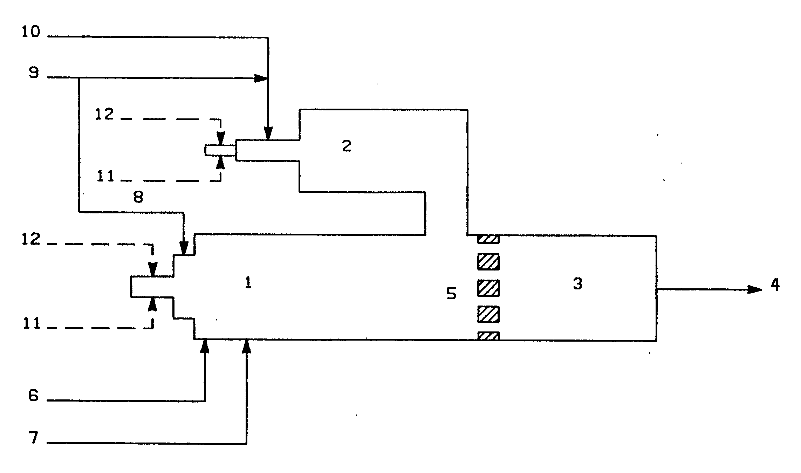

**Patentansprüche**

1. Kontinuierliches Verfahren zur simultanen Erzeugung von elementarem Schwefel aus $H_2S$-haltigen Gasen und $SO_2$-haltigen Gasen, wobei

a) das gesamte $H_2S$-haltige Gas in Gegenwart eines $O_2$-haltigen Gases, bevorzugt von Luft, im Mol-Verhältnis $H_2S$ : $O_2$ von weniger als 2 : 1 und eines Teiles des $SO_2$-haltigen Gases im Mol-Verhältnis $H_2S$ : $SO_2$ von mehr als 4 : 1 im vorderen Bereich einer 1. Reaktionszone bei Temperaturen im Bereich von 800 - 1400 °C einer partiellen Verbrennung unterworfen wird, unter Erzeugung eines Reaktionsgemisches aus elementarem Schwefel mit einer $H_2S$- und $SO_2$-Menge im Mol-Verhältnis von 2 : 1 bis 1 : 10;

b) das restliche $SO_2$-haltige Gas in einer 2. Reaktionszone durch Umsetzung mit einem Reduktionsgas bei Temperaturen im Bereich von 1000 - 1500 °C in ein elementaren Schwefel sowie $H_2S$ und $SO_2$ im Mol-Verhältnis von 2 : 1 bis 10 : 1 enthaltendes Reaktionsgemisch überführt wird;

c) das im hinteren Bereich der 1. Reaktionszone gebildete Gemisch der Reaktionsströme aus den Stufen a) und b) in einer anschließenden 3. Reaktionszone ohne weitere direkte Wärmezufuhr bei einer Temperatur im Bereich von 800 - 1300 °C umgesetzt wird, unter Erzeugung von elementarem Schwefel und Abgas mit einem Mol-Verhältnis von $H_2S$ : $SO_2$ von etwa 2 : 1, maximal etwa 20 Mol-

% H$_2$S und weniger als etwa 65 Mol-% H$_2$O;

d) das Abgas aus Stufe c) nach partieller Abkühlung unter Wärmerückgewinnung und Schwefel-Kondensation in einer mehrstufigen Claus-Anlage zu weiterem elementarem Schwefel umgesetzt wird.

2. Verfahren gemäß Anspruch 1, dadurch gekennzeichnet, daß der hintere Teil der 1. Reaktionszone über einen Stutzen mit der 2. Reaktionszone und über eine senkrecht stehende, gitter- oder wabenförmige Mischwand mit einem Differenzdruck Von etwa 3 - 10 mbar mit der 3. Reaktionszone verbunden ist.

3. Verfahren gemäß einem der Ansprüche 1 bis 2, dadurch gekennzeichnet, daß zur Einstellung der Temperatur in Stufe a) gleichzeitig ein kohlenwasserstoff-haltiges Gas verbrannt wird.

4. Verfahren gemäß einem der Ansprüche 1 bis 3, dadurch gekennzeichnet, daß zur Einstellung der Temperatur in Stufe b) das SO$_2$-haltige Gas vor der Umsetzung mit dem Reduktionsgas direkt durch Verbrennen eines kohlenwasserstoff-haltigen Gases erhitzt wird.

5. Verfahren gemäß einem der Ansprüche 1 bis 4, dadurch gekennzeichnet, daß zusätzlich das SO$_2$-haltige Gas und/oder das H$_2$S-haltige Gas und/oder das Reduktionsgas und/oder das O$_2$-haltige Gas vor Einführung in die jeweilige Stufe durch indirekte äußere Wärmezufuhr erhitzt werden.

6. Verfahren gemäß einem der Ansprüche 1 bis 5, dadurch gekennzeichnet, daß als Reduktionsgas reiner Wasserstoff, Erdgas, Kohlenmonoxid, oder ein H$_2$-, CH$_4$- und/oder CO-haltiges Gas verwendet wird.

7. Verfahren gemäß einem der Ansprüche 1 bis 6, dadurch gekennzeichnet, daß das Reduktionsgas durch unterstöchiometrische Verbrennung von 20 - 50 % von im wesentlichen aus Methan bestehendem Heizgas mit Luft und Vermischen der Verbrennungsgase mit den restlichen 80 - 50 % dieses Heizgases gebildet wird.

8. Verfahren gemäß einem der Ansprüche 1 bis 7, dadurch gekennzeichnet, daß von dem in die 2. Reaktionszone einzuleitenden SO$_2$-haltigen Gas nur etwas über zwei Drittel der Reduktion unterworfen werden und der Rest dem Reaktionsgemisch aus der Reduktionszone vor dem Mischen mit dem Gemisch aus der 1. Reaktionszone unter Bildung von elementarem Schwefel zugesetzt wird.

9. Verfahren gemäß einem der Ansprüche 1 bis 8, dadurch gekennzeichnet, daß die Temperatur in Stufe a) 900 - 1250 °C, in Stufe b) 1150 - 1300 °C und in Stufe c) 900 - 1200 °C beträgt.

**Claims**

1. A continuous process for the simultaneous production of elementary sulphur from gases containing H$_2$S and gases containing SO$_2$, in which

a) all the gas containing H$_2$S undergoes partial combustion in the presence of a gas containing O$_2$, preferably air, in the mole ratio H$_2$S : O$_2$ of less than 2 : 1 and in the presence of a part of the gas containing SO$_2$ in the mole ratio H$_2$S : SO$_2$ of more than 4 : 1 in the front region of a first reaction zone at temperatures in the range of from 800 - 1400 °C, with the production of a reaction mixture of elementary sulphur with an H$_2$S and SO$_2$ quantity in the mole ratio of 2 : 1 to 1 : 10;

b) the remaining gas containing SO$_2$ in a second reaction zone is converted into a reaction mixture containing elementary sulphur and also H$_2$S and SO$_2$ in the mole ratio of 2 : 1 to 10 : 1 by conversion with a reduction gas at temperatures in the range of 1000 - 1500 °C;

c) the mixture of the reaction flows from stages a) and b) formed in the rear region of the first reaction zone is converted in a connected third reaction zone without further direct addition of heat at a temperature in the range of from 800 - 1300 °C, with the production of elementary sulphur and exhaust gas with a mole ratio of H$_2$S : SO$_2$ of roughly 2 : 1, at most roughly 20 mol % H$_2$S and less than roughly 65 mol % H$_2$O;

d) after partial cooling with heat recovery and the condensation of sulphur, in a multi-stage Claus plant the exhaust gas from stage c) is transformed into further elementary sulphur.

2. A process according to Claim 1,

6

**characterised in that** the rear part of the first reaction zone is connected via a connection piece with the second reaction zone and via a perpendicular latticed or honeycombed checker wall having a differential pressure of approximately 3 - 10 mbar with the third reaction zone.

3. A process according to one of Claims 1 to 2,
   **characterised in that** a gas containing hydrocarbon is simultaneously burnt to regulate the temperature in stage a).

4. A process according to one of Claims 1 to 3,
   **characterised in that** to regulate the temperature in stage b) the gas containing $SO_2$ is directly heated by burning a gas containing hydrocarbon before transformation with the reduction gas.

5. A process according to one of Claims 1 to 4,
   **characterised in that** in addition the gas containing $SO_2$ and/or the gas containing $H_2S$ and/or the reduction gas and/or the gas containing $O_2$ are heated by an indirect external heat supply before being introduced into the respective stage.

6. A process according to one of Claims 1 to 5,
   **characterised in that** pure hydrogen, natural gas, carbon monoxide, or a gas containing $H_2$, $CH_4$ and/or CO is used as the reduction gas.

7. A process according to one of Claims 1 to 6,
   **characterised in that** the reduction gas is formed by the substoichiometric combustion of 20 - 50 % fuel gas, consisting mainly of methane, with air, and by mixing the combustion gases with the remaining 80 - 50 % of this fuel gas.

8. A process according to one of Claims 1 to 7,
   **characterised in that** of the gas containing $SO_2$ to be introduced into the second reaction zone only somewhat over two thirds undergo reduction and the remainder is added to the reaction mixture from the reduction zone before mixing with the mixture from the first reaction zone with the formation of elementary sulphur.

9. A process according to one of Claims 1 to 8,
   **characterised in that** in stage a) the temperature is 900 -1250 $^\circ$C, in stage b) it is 1150 - 1300 $^\circ$C and in stage c) it is 900 - 1200 $^\circ$C.

## Revendications

1. Procédé en continu pour la production simultanée de soufre à partir de gaz contenant du $H_2S$ et de gaz contentant du $SO_2$, dans lequel

   a) la totalité du gaz contenant du $H_2S$, en présence d'un gaz contenant du $O_2$, de préférence de l'air, dans un rapport molaire $H_2S : O_2$ de moins de 2 : 1, et une partie du gaz contenant du $SO_2$ dans un rapport molaire $H_2S : SO_2$ de plus de 4 : 1 sont soumis à une combustion partielle dans la partie avant d'une première zone de réaction à des températures entre 800 et 1400 $^\circ$C, et sous formation d'un mélange de réaction comprenant du soufre élémentaire avec une quantité de $H_2S$ et de $SO_2$ dans un rapport molaire de 2 : 1 à 1 : 10;
   b) le reste du gaz contenant du $SO_2$ est transformé dans une deuxième zone de réaction par réaction avec un gaz de réduction à des températures entre 1000 et 1500 $^\circ$C en un mélange de réaction contenant du soufre élémentaire ainsi que du $H_2S$ et du $SO_2$ dans un rapport molaire de 2 : 1 à 10 : 1;
   c) le mélange des courants de réaction provenant des étapes a) et b) formé dans la partie arrière de la première zone de réaction est converti dans une troisième zone de réaction reliée aux précédentes, sans adduction additionelle de chaleur à une température entre 800 et 1300 $^\circ$C sous formation de soufre élémentaire et d'un effluent gazeux avec un rapport molaire $H_2S : SO_2$ d'environ 2 : 1, au maximum environ 20 % en moles de $H_2S$ et moins d'environ 65 % en moles de $H_2O$;
   d) l'effluent gazeux de l'étape c) après refroidissement partiel sous récupération de chaleur et condensation de soufre est transformé dans une installation de Claus à zones multiples en soufre élémentaire.

2. Procédé suivant la revendication 1, caractérisé en ce que la partie arrière de la première zone de réaction est reliée à la deuxième zone de réaction par un raccord de tuyeau et à la troisième zone de réaction par une paroi mélangeuse de position verticale, treillissée ou en nid d,abeilles, avec une pression différentielle d'environ 3 à 10 mbar.

3. Procédé suivant l'une des revendications 1 ou 2, caractérisé en ce que pour le réglage de la température de l'étape a) un gaz contenant des hydrocarbures est brûlé simultanément.

4. Procédé suivant l'une des revendications 1 à 3, caractérisé en ce que pour le réglage de la température de l'étape b) le gaz contentant du $SO_2$ est chauffé avant la réaction avec le gaz de réduction, directement par combustion d'un gaz contenant des hydrocarbures.

5. Procédé suivant l'une des revendications 1 à 4, caractérisé en ce que en plus le gaz contenant du $SO_2$ et/ou le gaz contenant du $H_2S$ et/ou le gaz de réduction et/ou le gaz contenant du $O_2$ est chauffé avant l'introduction dans l'étape respective par adduction indirecte de chaleur extérieure.

6. Procédé suivant l'une des revendications 1 à 5, caractérisé en ce que de l'hydrogène pur, du gaz naturel, du monoxyde de carbone ou un gaz contenant du $H_2$, du $CH_4$ et/ou du CO est utilisé comme gaz de réduction.

7. Procédé suivant l'une des revendications 1 à 6, caractérisé en ce que le gaz de réduction est formé par combustion sousstoechiométrique avec de l'air de 20 à 50 % du gaz de chauffage consistant essentiellement en méthane, et par mélange des gaz de combustion avec les 80 à 50 % restants de ce gaz de chauffage.

8. Procédé suivant l'une des revendications 1 à 7, caractérisé en ce que seulement un peu plus que deux tiers du gaz contenant du $SO_2$ à introduire dans la deuxième zone de réaction sont soumis à la réduction, et que le reste est ajouté au mélange de réaction de la zone de réduction sous formation de soufre élémentaire, avant l'addition au mélange de la première zone de reaction.

9. Procédé suivant l'une des revendications 1 à 8. caractérisé en ce que la température de l'étape a) est de 900 à 1250 $^\circ$C, de l'étape b) de 1150 à 1300 $^\circ$C et de l'étape c) de 900 à 1200 $^\circ$C.